# EUROPEAN PATENT APPLICATION

(11) **EP 4 832 618 A1**
(43) Date of publication of application: **28.10.2026**
(21) Application number: 25747687.9
(22) Date of filing: 22.01.2025
(51) Int. Cl.: H04W 72/0453

(54) **COMMUNICATION METHODS AND COMMUNICATION APPARATUS**

(30) Priority: 30.01.2024 CN 202410137235
(71) Applicant: Huawei Technologies Co., Ltd., Shenzhen, Guangdong 518129 (CN)
(72) Inventor: LI, Xinxian, Shenzhen, Guangdong 518129 (CN); DING, Mengying, Shenzhen, Guangdong 518129 (CN); PENG, Jinlin, Shenzhen, Guangdong 518129 (CN)
(74) Representative: Huawei European IPR
(86) International application number: PCT/CN2025/073936
(87) International publication number: WO 2025/162116

(57) **Abstract**

This application provides a communication method and a communication apparatus. The method includes: A terminal receives a synchronization signal block SSB, where the SSB is located in a first frequency domain unit of a first cell, a frequency domain resource of the first cell includes *m* frequency domain units, *m* is an integer greater than 1, the m frequency domain units are non-adjacent in frequency domain, the SSB indicates a resource carrying control information, and the control information is used to schedule a system information block SIB1; and further, the terminal receives the SIB1 based on the SSB. According to the method, a frequency domain resource of one cell includes a plurality of frequency domain units that are non-adjacent in frequency domain, and the terminal can use a plurality of spectrum bands by accessing a cell, thereby helping reduce operation complexity of the terminal.

## Description

This application claims priority to Chinese Patent Application No. 202410137235.9, filed with the China National Intellectual Property Administration on January 30, 2024, and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

A wider transmission bandwidth can provide a larger network capacity and a higher transmission rate. However, in an actual application, due to the limitation of actually deployed spectrum bandwidth resources and a processing capability of a terminal, wideband continuous spectrum resources are scarce, that is, a bandwidth of a single carrier is limited. In order to solve the problem of the limited bandwidth of the single carrier, the carrier aggregation (carrier aggregation, CA) technology is introduced in a communication standard. In the CA technology, two or more component units (component carriers, CCs) may be aggregated together to serve the terminal, to support a wider transmission bandwidth.

In CA scenarios, the terminal has a plurality of serving cells, that is, there may be a plurality of cells that provide services for the terminal. The plurality of serving cells of the terminal may include one primary cell (primary cell, PCell) and one or more secondary cells (secondary cells, SCells).

In other words, when the terminal needs to use a plurality of spectrum bands, the terminal needs to access a plurality of cells simultaneously, causing an increase in operation complexity of a communication device.

### SUMMARY

Embodiments of this application provide a communication method and a communication apparatus, to help reduce operation complexity of a communication device when a terminal needs to use a plurality of spectrum bands.

According to a first aspect, this application provides a communication method, where the communication method is performed by a terminal or performed by a module used in the terminal. For example, the method is performed by a terminal. The method includes: The terminal receives a synchronization signal block SSB, where the SSB is located in a first frequency domain unit of a first cell, a frequency domain resource of the first cell includes *m* frequency domain units, *m* is an integer greater than 1, the *m* frequency domain units are non-adjacent in frequency domain, the SSB indicates a resource of control information, and the control information is used to schedule a system information block SIB1; and further, the terminal receives the SIB1.

Compared with a method in which a terminal can use a plurality of spectrum bands only by accessing a plurality of cells, in the method described in the first aspect, a frequency domain resource of one cell includes a plurality of frequency domain units that are non-adjacent in frequency domain, so that the terminal can use a plurality of spectrum bands by accessing the cell. According to the method described in the first aspect, the terminal does not need to perform synchronization, configuration, measurement, or the like on a plurality of cells, thereby helping reduce operation complexity of the terminal.

According to a second aspect, this application provides a communication method, where the communication method is performed by a network device or performed by a module used in the network device. For example, the method is performed by a network device. The method includes: The network device sends a synchronization signal block SSB, where the SSB is located in a first frequency domain unit of a first cell, a frequency domain resource of the first cell includes *m* frequency domain units, *m* is an integer greater than 1, the *m* frequency domain units are non-adjacent in frequency domain, the SSB indicates a resource of control information, and the control information is used to schedule a system information block SIB1; and further, the network device sends the SIB1.

In the method described in the second aspect, a frequency domain resource of one cell includes a plurality of frequency domain units that are non-adjacent in frequency domain. When a terminal needs to use a plurality of spectrum bands, compared with a method in which the network device manages a plurality of cells to enable the terminal to use the plurality of spectrum bands, in this method, the network device can enable the terminal to use the plurality of spectrum bands by managing the cell, thereby helping reduce operation and maintenance management complexity of the network device.

With reference to the method provided in the first aspect or the second aspect, in a possible implementation, the *m* frequency domain units correspond to a same downlink carrier, or the *m* frequency domain units correspond to *m* downlink carriers.

With reference to the method provided in the first aspect or the second aspect, in a possible implementation, the SSB includes first indication information, the first indication information indicates an absolute frequency channel number of a frequency domain start location of a control resource set CORESET 0 and a bandwidth of the CORESET 0, and the CORESET 0 is a CORESET used to schedule the SIB1. When a distance between a frequency domain start location of the CORESET 0 and a frequency domain start location of the SSB is large, compared with a method in which the frequency domain start location of the CORESET 0 is indicated by indicating an offset value between the frequency domain start location of the CORESET 0 and the frequency domain start location of the SSB, the frequency domain start location of the CORESET 0 is indicated by indicating the absolute frequency channel number of the frequency domain start location of the CORESET 0, thereby helping reduce signaling overheads.

With reference to the method provided in the first aspect or the second aspect, in a possible implementation, the SIB1 includes first configuration information, and the first configuration information indicates a start location and a bandwidth of each of the *m* frequency domain units.

With reference to the method provided in the first aspect or the second aspect, in a possible implementation, the first configuration information includes second indication information and third indication information, the second indication information indicates one or *m* frequency reference points corresponding to the *m* frequency domain units, the third indication information indicates first offset value information corresponding to each of the *m* frequency domain units, and the first offset value information indicates offset between a start location of a frequency domain unit and a frequency reference point corresponding to the frequency domain unit.

With reference to the method provided in the first aspect or the second aspect, in a possible implementation, the second indication information indicates an absolute frequency channel number of each of the one or *m* frequency reference points, or the second indication information indicates second offset value information corresponding to each of the one or *m* frequency reference points, and the second offset value information indicates offset between a frequency reference point and the SSB.

With reference to the method provided in the first aspect or the second aspect, in a possible implementation, the first offset value information indicates an offset value and an offset direction, and/or the second offset value information indicates an offset value and an offset direction.

According to a third aspect, this application provides a communication apparatus. The communication apparatus may be a terminal, or may be an apparatus in the terminal, or may be an apparatus that can be used in conjunction with the terminal. The communication apparatus may alternatively be a chip system. The communication apparatus may perform the method provided in the first aspect. A function of the communication apparatus may be implemented by hardware, or may be implemented by hardware executing corresponding software. The hardware or the software includes one or more units or modules corresponding to the foregoing functions. The unit or module may be software and/or hardware. For operations performed by the communication apparatus and beneficial effects thereof, refer to the method provided in the first aspect and the beneficial effects thereof.

According to a fourth aspect, this application provides a communication apparatus. The communication apparatus may be a network device, an apparatus in the network device, or an apparatus that can be used in conjunction with the network device. The communication apparatus may alternatively be a chip system. The communication apparatus may perform the method provided in the second aspect. A function of the communication apparatus may be implemented by hardware, or may be implemented by hardware executing corresponding software. The hardware or the software includes one or more units or modules corresponding to the foregoing functions. The unit or module may be software and/or hardware. For operations performed by the communication apparatus and beneficial effects thereof, refer to the method provided in the second aspect and the beneficial effects thereof.

According to a fifth aspect, this application provides a communication apparatus. The communication apparatus includes a processor and an interface circuit, where the interface circuit is configured to: receive a signal from another communication apparatus other than the communication apparatus and transmit the signal to the processor, or send a signal from the processor to another communication apparatus other than the communication apparatus; and the processor is configured to implement the method provided in the first aspect through a logic circuit or by executing code instructions, or the processor is configured to implement the method provided in the second aspect through a logic circuit or by executing code instructions.

According to a sixth aspect, this application provides a computer-readable storage medium. The storage medium stores a computer program or instructions, and when the computer program or the instructions are executed by a communication apparatus, the method provided in the first aspect is implemented, or the method provided in the second aspect is implemented.

According to a seventh aspect, this application provides a computer program product including instructions. When a communication apparatus reads and executes the instructions, the communication apparatus is caused to perform the method provided in the first aspect, or the communication apparatus is caused to perform the method described in the second aspect.

According to an eighth aspect, this application provides a communication system, including a communication apparatus configured to perform the method provided in the first aspect and a communication apparatus configured to perform the method provided in the second aspect.

### BRIEF DESCRIPTION OF DRAWINGS

FIG. 1 is a diagram of a communication system according to an embodiment of this application;
FIG. 2 is a diagram of carrier aggregation according to an embodiment of this application;
FIG. 3 is a diagram of a structure of an SSB according to an embodiment of this application;
FIG. 4 is a schematic flowchart of a communication method according to an embodiment of this application;
FIG. 5a and FIG. 5b are diagrams of frequency reference points according to an embodiment of this application;
FIG. 6 is a diagram of offset value information according to an embodiment of this application;
FIG. 7 is a diagram of a structure of a communication apparatus according to an embodiment of this application; and
FIG. 8 is a diagram of a structure of another communication apparatus according to an embodiment of this application.

### DESCRIPTION OF EMBODIMENTS

For ease of specific understanding of embodiments of this application, the following first describes a system architecture in embodiments of this application.

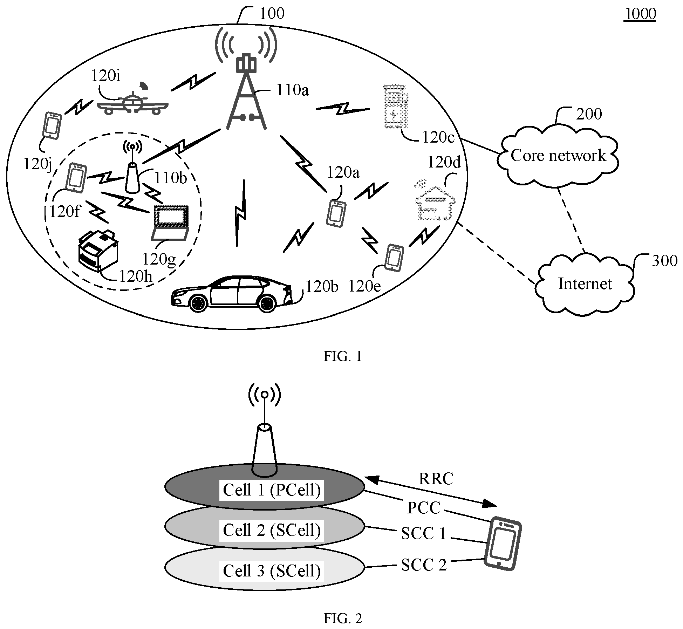

FIG. 1 is a diagram of an architecture of a communication system 1000 to which an embodiment of this application is applied. As shown in FIG. 1, the communication system includes a radio access network (radio access network, RAN) 100 and a core network 200. Optionally, the communication system 1000 may further include an Internet 300. The RAN 100 includes at least one RAN node (for example, 110a and 110b in FIG. 1, which are collectively referred to as 110), and further includes at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The terminals may be connected to each other in a wired or wireless manner, and the RAN nodes may be connected to each other in a wired or wireless manner. It should be noted that the RAN node 110 may also be referred to as a network device 110 in the following.

The RAN 100 may be an evolved universal terrestrial radio access (evolved universal terrestrial radio access, E-UTRA) system, a new radio (new radio, NR) system, or a future radio access system defined in the 3rd generation partnership project (3rd generation partnership project, 3GPP). The RAN 100 may further include the foregoing two or more different radio access systems. The RAN 100 may alternatively be an open RAN (open RAN, O-RAN).

The RAN node, also referred to as a radio access network device, a RAN entity, or an access node, is configured to help the terminal access the communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, or a base station in a future mobile communication system. The RAN node may be a macro base station (for example, 110a in FIG. 1), or may be a micro base station or an indoor base station (for example, 110b in FIG. 1), or may be a relay node or a donor node.

In another application scenario, a plurality of RAN nodes may cooperate to help the terminal implement radio access, and different RAN nodes separately implement some functions of a base station. For example, the RAN node may be a central unit (central unit, CU), a distributed unit (distributed unit, DU), or a radio unit (radio unit, RU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to related technical specifications in the 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further classified into two types of RAN nodes: a CU-control plane and a CU-user plane.

In different systems, the RAN node may have different names. For example, in an O-RAN system, the CU may be referred to as an open CU (open CU, O-CU), the DU may be referred to as an open DU (open DU, O-DU), and the RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following is described by using an example in which a base station is used as the RAN node.

The terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, autonomous driving, remote medical, smart grid, smart furniture, smart office, smart wearable, smart transportation, and smart city. The terminal may be a mobile phone, a tablet, a computer with a wireless transceiver function, a wearable device, a vehicle, an airplane, a ship, a robot, a mechanical arm, a smart home device, or the like. A specific technology and a specific device form that are used by the terminal are not limited in embodiments of this application.

The base station and the terminal may be located at fixed positions, or may be mobile. The base station and the terminal may be deployed on land, including an indoor or outdoor device, or a handheld or vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an unmanned aerial vehicle 120i in FIG. 1 may be configured as a mobile base station. For the terminal 120j accessing the radio access network 100 through 120i, the terminal 120i is a base station, while for the base station 110a, 120i is a terminal. In other words, communication between 110a and 120i is performed according to a wireless air interface protocol. Certainly, communication between 110a and 120i may alternatively be performed according to an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a base station function, and 120a to 120j each in FIG. 1 may be referred to as a communication apparatus having a terminal function.

Communication between the base station and the terminal, between base stations, or between terminals may be performed through a licensed spectrum, or may be performed through an unlicensed spectrum, or may be performed through both the licensed spectrum and the unlicensed spectrum. Communication may be performed through a spectrum below 6 gigahertz (gigahertz, GHz), or may be performed through a spectrum above 6 GHz, or may be performed through both the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the base station function. The control subsystem including the base station function herein may be a control center in the foregoing application scenarios such as smart grid, industrial control, smart transportation, and smart city. A function of the terminal may be performed by a module (for example, a chip or a modem) in the terminal, or may be performed by an apparatus including the terminal function.

In this application, the base station sends a downlink signal or downlink information to the terminal, where the downlink information is carried on a downlink channel. The terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered with by a signal from a neighboring cell.

In embodiments of this application, a time-domain symbol may be an orthogonal frequency division multiplexing (orthogonal frequency division multiplexing, OFDM) symbol, or may be a discrete Fourier transform-spread-OFDM (Discrete Fourier Transform-spread-OFDM, DFT-s-OFDM) symbol. Unless otherwise specified, symbols in embodiments of this application are time domain symbols.

It may be understood that in embodiments of this application, a PDCCH is only used as an example of a downlink control channel. In different systems and different scenarios, a data channel and a control channel may have different names. This is not limited in embodiments of this application.

For ease of understanding related content in embodiments of this application, the following further explains and describes some terms in embodiments of this application. This part is merely for ease of understanding, and cannot be considered as a disclosure or a specific limitation on the technical solutions of this application.

### 1. Cell (cell)

The cell is a set of resources managed by a base station, including a frequency domain resource and a space domain resource. The frequency domain resource of the cell includes an uplink frequency domain resource and/or a downlink frequency domain resource. The space domain resource of the cell may be a space domain resource corresponding to one beam or a group of beams, and may alternatively be understood as that one cell corresponds to one specific physical coverage area. In embodiments of this application, different cells may be managed by different base stations. For example, a cell #1 and a cell #2 may be managed by different base stations. In this case, it may be considered as that the cell #1 and the cell #2 are not co-sited. The cell #1 and the cell #2 may alternatively be managed by a same base station, and have a same baseband processing unit and/or a same radio frequency processing unit. This is not specifically limited in this application.

### 2. CA

Refer to FIG. 2. CA technology is a technology in which two or more cells are aggregated to support a larger transmission bandwidth. In other words, in the CA technology, frequency resource integration can be implemented, and spectrum resources of a same frequency band or different frequency bands can be aggregated for use by a terminal, thereby improving resource utilization of an entire network.

When the CA is configured for the terminal, the terminal may have a plurality of serving cells, and the plurality of serving cells include one PCell and at least one SCell. The PCell is a cell in which the terminal and a network device perform initial connection establishment (connection establishment), or a cell in which the terminal performs radio resource control (radio resource control, RRC) connection reestablishment. The PCell is responsible for RRC communication with the terminal, and a CC corresponding to the PCell is referred to as a primary component carrier (primary component carrier, PCC). The SCell is added, modified, or released through an RRC connection reconfiguration message after an initial security activation procedure (initial security activation procedure). The SCell is used for providing an additional radio resource, and there is no RRC communication between the SCell and the terminal.

It should be noted that, in a CA scenario, aggregation of cells with a same subcarrier spacing (subcarrier spacing, SCS) may be supported, or aggregation of cells with different SCSs may be supported.

### 3. Physical downlink control channel (physical downlink control channel, PDCCH)

The PDCCH is transmitted in a form of a control channel element (control channel element, CCE), that is, the CCE is a minimum resource unit for PDCCH transmission. One PDCCH may include one or more CCEs, and a quantity of CCEs included in one PDCCH is determined by an aggregation level (aggregation level, AL). For details, refer to Table 1.

**Table 1**

| Aggregation level | Quantity of CCEs |
|---|---|
| 1 | 1 |
| 2 | 2 |
| 4 | 4 |
| 8 | 8 |
| 16 | 16 |

One CCE may transmit one piece of downlink control information (downlink control information, DCI). If a terminal device is far away, a signal is weak and the PDCCH cannot be demodulated. Therefore, a manner of increasing the aggregation level needs to be used to improve performance in receiving the PDCCH, so that the remote terminal device can also successfully demodulate the PDCCH. One CCE includes six resource element groups (resource element groups, REGs). One REG occupies one symbol in time domain, and occupies one resource block (resource block, RB) in frequency domain. One CCE includes 72 resource elements (resource elements, REs).

### 4. Control resource set (control resource set, CORESET)

The CORESET indicates a time-frequency resource set used to carry a PDCCH. One CORESET includes a plurality of RBs in frequency domain, which may be represented as ${N}_{frequency}^{CORESET}$, and ${N}_{frequency}^{CORESET}$ may be indicated by frequency domain resources in a higher-layer parameter control resource set information element (information element, IE). One CORESET includes one, two, or three symbols in time domain, and may be represented as ${N}_{symbol}^{CORESET} ∈ \left\{1, 2, 3\right\}$, where ${N}_{symbol}^{CORESET}$ may be indicated by duration in the higher-layer parameter control resource set IE. When duration in the higher-layer parameter is equal to 3, that is, a quantity of symbols of the CORESET indicated by the duration is 3, ${N}_{symbol}^{CORESET} = 3$.

### 5. Synchronization signal block (synchronization signal block, SSB)

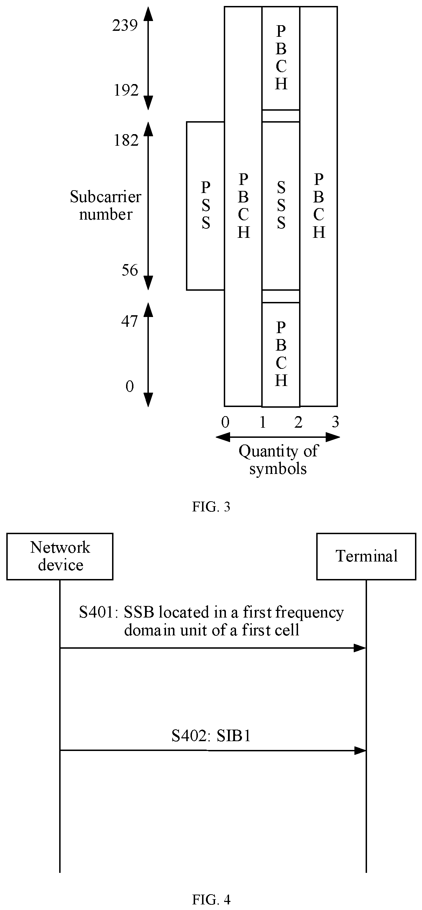

It should be noted that the SSB mentioned in this application may also be referred to as a synchronization signal/physical broadcast channel (synchronization signal/physical broadcast channel, SS/PBCH) block. Generally, the SSB includes a primary synchronization signal (primary synchronization signal, PSS), a secondary synchronization signal (secondary synchronization signal, SSS), and a physical broadcast channel (physical broadcast channel, PBCH). One SSB occupies four consecutive OFDM symbols in time domain and 20 consecutive resource blocks (resource blocks, RBs) in frequency domain. The 1^{st} symbol of the SSB is the PSS, and the 3^{rd} symbol is the SSS. Both the PSS and the SSS occupy 127 subcarriers. The PBCH is distributed on the 2^{nd} symbol to the 4^{th} symbol of the SSB. On the 2^{nd} symbol and the 4^{th} symbol, the PBCH occupies 240 subcarriers, and on two sides of the SSS on the 3^{rd} symbol, a part of REs are not used. Locations of the subcarriers respectively occupied by the PSS, the SSS, and the PBCH in one SSB are shown in FIG. 3.

The SSB is mainly used for cell access. To be specific, a terminal receives a master information block (master information block, MIB) through the SSB, so that the terminal obtains, based on the MIB, a system information block 1 (system information block 1, SIB1) associated with the SSB, and accesses a cell based on the SIB1. In addition, the SSB may be further used by the terminal to perform time-frequency tracking (or referred to as time-frequency synchronization), beam management, radio resource management (radio resource management, RRM) measurement, radio link monitoring (radio link monitoring, RLM) measurement, channel state information (channel state information, CSI) measurement, and the like.

Generally, one cell includes one downlink carrier. When the terminal accesses only one cell, the terminal can use only a frequency domain resource of the downlink carrier included in the cell. When the terminal needs to use a plurality of spectrum bands, the terminal needs to access a plurality of cells simultaneously. Consequently, the terminal needs to independently perform synchronization, configuration, measurement, and the like on the plurality of cells, causing an increase in complexity of the terminal. In addition, for a network device, each of the plurality of cells is independently managed, and operation and maintenance management complexity on a network side also increases exponentially with a quantity of cells.

To reduce operation complexity of the terminal or the network device in a scenario in which the terminal needs to use a plurality of spectrum bands, this application provides a communication method and a communication apparatus. The following describes in detail the communication method and the communication apparatus provided in embodiments of this application with reference to the accompanying drawings.

FIG. 4 is a schematic flowchart of a communication method according to an embodiment of this application. As shown in FIG. 4, the communication method includes the following step S401 and step S402. An example in which the method shown in FIG. 4 is performed by a terminal and a network device is used for description. It may be understood that the method shown in FIG. 4 may alternatively be performed by a module (for example, a chip) in the terminal and a module (for example, a chip, a CU, or a DU) in the network device.

S401: The network device sends an SSB, where the SSB is located in a first frequency domain unit of a first cell, a frequency domain resource of the first cell includes *m* frequency domain units, and *m* is an integer greater than 1.

Correspondingly, the terminal receives the SSB. In other words, the frequency domain resource of the first cell includes *m* frequency domain units, the *m* frequency domain units are non-adjacent in frequency domain, and frequency domain resources in each of the *m* frequency domain units are consecutive. It should be noted that sizes of the *m* frequency domain units may be different or may be the same. The network device broadcasts the SSB on the frequency domain resources of one of the *m* frequency domain units; or the network device broadcasts *m* SSBs on the frequency domain resources of the *m* frequency domain units, where the frequency domain resource of each frequency domain unit corresponds to one SSB. Further, the terminal receives, through blind detection, the SSB broadcast by the network device, and records, as the first frequency domain unit, a frequency domain unit in which the SSB received by the terminal device is located.

In a possible implementation, the *m* frequency domain units correspond to *k* frequency bands, *k* is a positive integer, and the *m* frequency domain units may be adjacent or may be non-adjacent in frequency domain. For example, when *k* is an integer greater than 1, that is, when the *m* frequency domain units belong to different frequency bands, the *m* frequency domain units are non-adjacent in frequency domain. When *k* is 1, that is, when the *m* frequency domain units belong to a same frequency band, the *m* frequency domain units may be adjacent or may be non-adjacent in frequency domain. When *k* is less than *m*, that is, when a part of frequency domain units in the *m* frequency domain units belong to a same frequency band, all of the *m* frequency domain units may be non-adjacent, or a part of the *m* frequency domain units may be adjacent and a part of the *m* frequency domain units may be non-adjacent. In other words, a plurality of frequency domain units in a same frequency band are adjacent, and different frequency domain units in different frequency bands are non-adjacent.

It should be noted that, for ease of description, an example in which the network device sends the SSB through one of the *m* frequency domain units (that is, the first frequency domain unit) is used below for description, and this should not be considered as a specific limitation on this application. It should be further noted that, when the network device respectively broadcasts the *m* SSBs on the frequency domain resources of the *m* frequency domain units, synchronization signals (including a PSS and an SSS) in the *m* SSBs may be the same or may be different; and/or loads of PBCHs in the *m* SSBs may be the same or may be different. For example, information indicated by subcarrier offset fields (that is, SSB-SubcarrierOffset) in the PBCHs in the *m* SSBs or configuration information (that is, pdcch-ConfigSIB1) of PDCCHs used to schedule an SIB1 may be different. Optionally, when the synchronization signals in the *m* SSBs are the same, different terminal devices that access the first cell through different SSBs of the *m* SSBs are anchored to a same physical cell identifier (physical cell identifier, PCI). When the synchronization signals in the *m* SSBs are different, different terminal devices that access the first cell through different SSBs of the *m* SSBs are anchored to different PCIs.

In a possible implementation, the *m* frequency domain units correspond to a same downlink carrier, that is, the first cell includes one non-consecutive downlink carrier, and a frequency domain resource of the downlink carrier includes the *m* frequency domain units; or the *m* frequency domain units correspond to *m* downlink carriers, that is, the first cell includes the *m* downlink carriers, and frequency domain resources of the *m* downlink carriers are different.

In a possible implementation, in addition to the *m* frequency domain units, the first cell further includes *n* frequency domain units (which are denoted as uplink frequency domain units for ease of differentiation) used for uplink transmission. Optionally, the n uplink frequency domain units correspond to l frequency bands. n and l are positive integers.

For example, frequency band combination information of the first cell is shown in Table 2. The frequency band combination information includes but is not limited to one or more of an NR operating band combination, a synchronization signal block subcarrier spacing, a synchronization signal block pattern, or a range of global synchronization channel number.

**Table 2**

| NR operating band combination (NR operating band combination) | Synchronization signal block subcarrier spacing (SS block SCS) | Synchronization signal block pattern (SS block pattern) | Range of global synchronization channel number (Range of GSCN) |
|---|---|---|---|
| n1 frequency band/n2 frequency band/n3 frequency band | 15 kHz | Case A | 5279-<1>-5419 |

In a possible implementation, the SSB includes first indication information, and the first indication information indicates an absolute frequency channel number of a frequency domain start location of a CORESET 0 and a bandwidth of the CORESET 0. The CORESET 0 is a CORESET used to schedule the SIB1. It should be noted that the CORESET 0 mentioned in this application may also be referred to as a CORESET #0. For related explanations of the CORESET #0, refer to the protocol TS 38.300. Alternatively, the CORESET 0 mentioned in this application may be alternatively understood as a CORESET corresponding to a set of type 0 physical downlink control channel common search space (type 0 PDCCH common search space, Type0-PDCCH CSS) or a CORESET whose index is 0.

For example, an MIB carried by the PBCH in the SSB includes the first indication information, the first indication information is pdcch-ConfigSIB1, and the pdcch-ConfigSIB1 indicates the absolute frequency channel number of the frequency domain start location of the CORESET 0 and the bandwidth of the CORESET 0. After obtaining the first indication information through the SSB, the terminal determines a location of the CORESET 0, and receives, on the CORESET 0, DCI used to schedule the SIB1. It may also be understood that the SSB indicates a resource carrying DCI, and the DCI is used to schedule the SIB1.

It should be noted that this application is described by using an example in which the absolute frequency channel number of the frequency domain start location of the CORESET 0 and the bandwidth of the CORESET 0 are indicated through one piece of indication information (that is, the first indication information) in the SSB, and this should not be considered as a specific limitation on this application. In other words, in the solution provided in this application, a plurality of pieces of indication information (for example, denoted as the first indication information and fifth indication information) may alternatively be used to respectively indicate the absolute frequency channel number of the frequency domain start location of the CORESET 0 and the bandwidth of the CORESET 0. For example, an MIB carried by the PBCH in the SSB includes indication information #1 and indication information #2, the indication information #1 indicates the absolute frequency channel number of the frequency domain start location of the CORESET 0, and the indication information #2 indicates the bandwidth of the CORESET 0.

It may be understood that the network device may limit, through the first indication information, that a frequency domain location of the CORESET 0 is in any one of the *m* frequency domain units.

S402: The network device sends the SIB1.

Correspondingly, the terminal receives the SIB1. It may be understood that the terminal receives, based on the location of the CORESET 0 indicated by the first indication information in the SSB, the DCI used to schedule the SIB1. Further, the terminal receives the SIB1 based on the DCI. Further, the terminal may further access the first cell based on the SIB1.

The SIB1 is used to configure the frequency domain units of the first cell. With reference to content that is in the SIB1 and that is used to configure the frequency domain units of the first cell, the following describes in detail a process in which the terminal obtains the *m* frequency domain units of the first cell in the following three cases.

Case 1: The SIB1 includes first configuration information, and the first configuration information indicates a start location and a bandwidth of each of the *m* frequency domain units.

The first configuration information includes second indication information and third indication information, the second indication information indicates one or *m* frequency reference points corresponding to the *m* frequency domain units, the third indication information indicates first offset value information corresponding to each of the *m* frequency domain units, and the first offset value information indicates offset between a start location of a frequency domain unit and a frequency reference point corresponding to the frequency domain unit.

It may be understood that when the *m* frequency domain units may correspond to one frequency reference point, the frequency reference point may be referred to as a common frequency reference point or a common Point A. When the *m* frequency domain units may correspond to *m* frequency reference points, the frequency reference points may be referred to as independent frequency reference points.

In a possible implementation, this application provides two manners of indicating a frequency reference point corresponding to a frequency domain unit. Manner 1: The frequency reference point is indicated by indicating an absolute frequency channel number of the frequency reference point. Manner 2: The frequency reference point is indicated by indicating offset between the frequency reference point and the SSB. In other words, the second indication information indicates the absolute frequency channel number of each of the one or *m* frequency reference points, or the second indication information indicates second offset value information corresponding to each of the one or *m* frequency reference points, and the second offset value information indicates the offset between the frequency reference point and the SSB. It should be noted that the offset between the frequency reference point and the SSB mentioned in this application includes but is not limited to any one of the following understandings: ① offset between the frequency reference point and a frequency domain start location of the SSB; ② offset between the frequency reference point and a frequency domain center location of the SSB; ③ offset between the frequency reference point and a subcarrier 0 of a 1^{st} RB of the SSB, or the like; and ④ offset between the frequency reference point and a subcarrier 0 of a common RB overlapping with a subcarrier 0 of an RB 0 corresponding to the SSB, or the like.

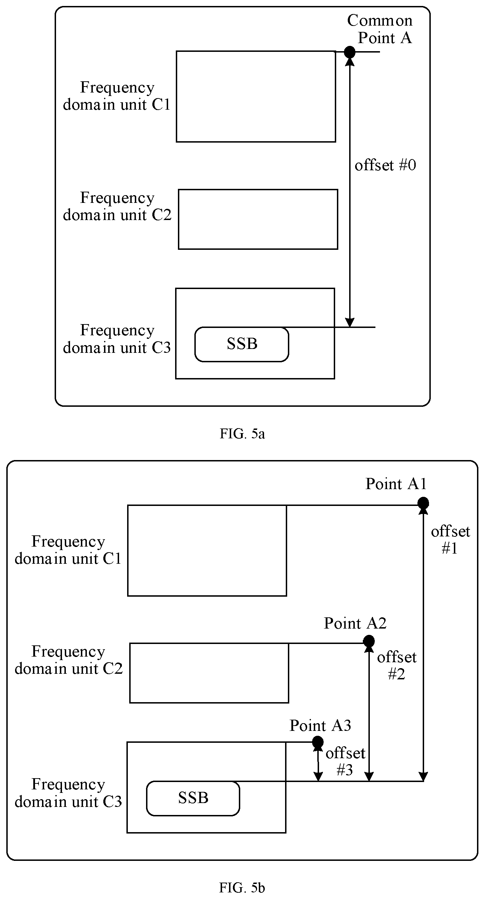

For example, the frequency domain resource of the first cell includes three frequency domain units (a frequency domain unit C1 to a frequency domain unit C3), and the SSB is located in the frequency domain unit C3. If the second indication information indicates that an offset value between a common Point A and the frequency domain start location of the SSB is an offset #0, the common point A that corresponds to the frequency domain unit C1 to the frequency domain unit C3 and that is determined based on the second indication information is shown in FIG. 5a. If the second indication information indicates that offset values between a point A1 and the frequency domain start location of the SSB, between a point A2 and the frequency domain start location of the SSB, and between a point A3 and the frequency domain start location of the SSB (that is, between each of three independent frequency reference points and the frequency domain start location of the SSB) are an offset #1, an offset #2, and an offset #3, the independent frequency reference points that respectively correspond to the frequency domain unit C1 to the frequency domain unit C3 and that are determined based on the second indication information are shown in FIG. 5b.

After the frequency reference point corresponding to each frequency domain unit is determined, frequency domain start location information of the frequency domain unit may be determined based on the first offset value information that is between the frequency domain unit and the corresponding frequency reference point and that is indicated by the third indication information. Further, a frequency domain resource of the frequency domain unit is obtained with reference to a bandwidth of the frequency domain unit.

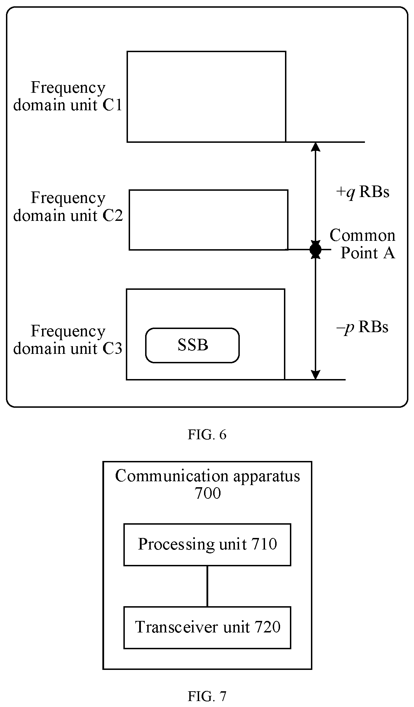

It should be noted that offset value information (including the first offset value information, the second offset value information, the following third offset value information, and the following fourth offset value information) mentioned in this application may indicate an offset value and an offset direction, or may only indicate an offset value. The offset direction includes a direction to a higher frequency domain location and a direction to a lower frequency domain location. For example, the frequency domain unit C1 to the frequency domain unit C3 correspond to one common Point A, and the third indication information indicates that a first offset value of the frequency domain unit C1 is +*q* RBs (that is, offsetting by *q* RBs are offset in a direction to a higher frequency domain location of the common Point A), a first offset value of the frequency domain unit C2 is 0 RBs, and a first offset value of the frequency domain unit C3 is -*p* RBs (that is, offsetting by *p* RBs in a direction to a lower frequency domain location of the common point A). Start locations of the frequency domain unit C1 to the frequency domain unit C3 are shown in FIG. 6.

It should be further noted that a quantity of pieces of second indication information and a quantity of pieces of third indication information that are included in the first configuration information are not specifically limited in this application. In a possible scenario, the *m* frequency domain units may correspond to one common frequency reference point. In this case, the first configuration information may indicate the common frequency reference point through one piece of second indication information, and indicate first offset values between the *m* frequency domain units and the common frequency reference point through *m* pieces of third indication information. In another possible scenario, the *m* frequency domain units may correspond to *m* frequency reference points. In this case, the first configuration information may indicate the *m* frequency reference points through *m* pieces of second indication information, and indicate, through *m* pieces of third indication information, first offset values between the frequency domain units and the frequency reference points corresponding to the frequency domain units.

It should be further noted that the second indication information and the third indication information may be different indication information, or may be same indication information (denoted as fourth indication information for ease of understanding). For example, the first configuration information includes *m* pieces of fourth indication information, the *m* pieces of fourth indication information are in one-to-one correspondence with the frequency domain units, and each piece of fourth indication information indicates first offset value information and a start location of a frequency reference point of a frequency domain unit corresponding to the fourth indication information.

Case 2: The SIB1 includes second configuration information, and the second configuration information indicates a start location and a bandwidth of the first frequency domain unit.

In other words, the terminal may obtain, through the SIB1, the start location and the bandwidth of the first frequency domain unit in which the SSB is located. In this case, the terminal receives the fifth indication information from the network device, where the fifth indication information indicates a start location and a bandwidth of each of *m*-1 frequency domain units, and the *m*-1 frequency domain units are frequency domain units in the *m* frequency domain units other than the first frequency domain unit.

It should be learned that the SIB1 includes information about a first frequency reference point (that is, a frequency reference point corresponding to the first frequency domain unit). In a possible implementation, the fifth indication information indicates the third offset value information of each of the m-1 frequency domain units, and the third offset value information indicates offset between a start location of each frequency domain unit and the first frequency reference point. In another possible implementation, the fifth indication information indicates m-1 frequency reference points corresponding to the m-1 frequency domain units and fourth offset value information corresponding to each frequency domain unit, and the fourth offset value information indicates offset between a start location of a frequency domain unit and a frequency reference point corresponding to the frequency domain unit.

For a manner in which the fifth indication information indicates the *m*-1 frequency reference points corresponding to the *m*-1 frequency domain units, refer to the foregoing descriptions of the manner in which the second indication information indicates the *m* frequency reference points corresponding to the *m* frequency domain units. For a manner in which the fifth indication information indicates the fourth offset value information corresponding to each frequency domain unit, refer to the foregoing descriptions of the manner in which the third indication information indicates the first offset value information corresponding to each frequency domain unit. Details are not described herein again.

In a possible implementation, after the terminal accesses the first cell based on the second configuration information, the terminal sends, to the network device, capability information indicating that the terminal has a first capability. The first capability may be understood as a capability of supporting access to the first cell, or may be understood as a capability of supporting access to a cell that includes a plurality of non-adjacent frequency domain units. Further, the network device sends the fifth indication information to the terminal based on the capability information. The fifth indication information may be carried in an RRC message.

In a possible implementation, the SIB1 broadcast by the network device includes the second configuration information. After the terminal having the capability of supporting access to the first cell accesses the first cell, the network device updates configuration information in the SIB1, and an updated SIB1 includes the first configuration information. The terminal accessing the first cell may obtain the start location and the bandwidth of each of the *m* frequency domain units by obtaining the updated SIB1.

Case 3: The SIB1 includes first configuration information and second configuration information, the first configuration information indicates a start location and a bandwidth of each of the *m* frequency domain units, and the second configuration information indicates a start location and a bandwidth of the first frequency domain unit.

The first configuration information corresponds to first identification information, and/or the second configuration information corresponds to second identification information. The first identification information indicates a first-type terminal device that does not have a first capability, and the second identification information indicates a second-type terminal device that has the first capability. Optionally, the first identification information and the second identification information belong to release (release) identifiers, and terminals of different releases may receive different configuration information based on the first identification information and the second identification information.

In conclusion, compared with a method in which a terminal can use a plurality of spectrum bands only by accessing a plurality of cells, in the method described in FIG. 4, a frequency domain resource of one cell includes a plurality of frequency domain units that are non-adjacent in frequency domain, so that the terminal can use a plurality of spectrum bands by accessing the cell. According to the method, the terminal does not need to perform synchronization, configuration, measurement, or the like on a plurality of cells, thereby helping reduce operation complexity of the terminal. In addition, the network device can enable the terminal to use a plurality of spectrum bands by managing one cell, thereby helping reduce operation and maintenance management complexity of the network device.

It may be understood that to implement functions in the foregoing embodiments, the terminal includes corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by a transceiver unit of computer software depends on specific application scenarios and design constraint conditions of the technical solutions.

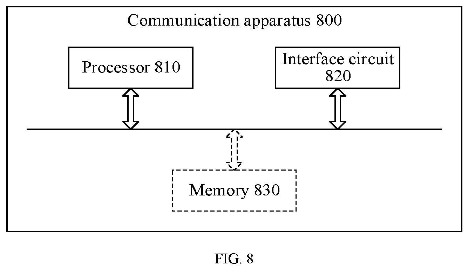

FIG. 7 and FIG. 8 are diagrams of structures of possible communication apparatuses according to embodiments of this application. These communication apparatuses may be configured to implement functions of the terminal in the foregoing method embodiments, and therefore can also achieve beneficial effects of the foregoing method embodiments. In embodiments of this application, the communication apparatus may be the terminal 120 shown in FIG. 1, or may be a module (for example, a chip) used in the terminal; or the communication apparatus may be the network device 110 shown in FIG. 1, or may be a module (for example, a chip) used in the network device.

As shown in FIG. 7, a communication apparatus 700 includes a processing unit 710 and a transceiver unit 720. The communication apparatus 700 is configured to implement functions of the terminal in the method embodiment shown in FIG. 4.

When the communication apparatus 700 is configured to implement the functions of the terminal in the method embodiment shown in FIG. 4, the transceiver unit 720 is configured to receive a synchronization signal block SSB, where the SSB is located in a first frequency domain unit of a first cell, a frequency domain resource of the first cell includes *m* frequency domain units, *m* is an integer greater than 1, the *m* frequency domain units are non-adjacent in frequency domain, the SSB indicates a resource carrying control information, and the control information is used to schedule an SIB1; and further, the transceiver unit 720 is further configured to receive the SIB1.

In a possible implementation, the *m* frequency domain units correspond to a same downlink carrier, or the *m* frequency domain units correspond to *m* downlink carriers.

In a possible implementation, the SSB includes first indication information, the first indication information indicates an absolute frequency channel number of a frequency domain start location of a control resource set CORESET 0 and a bandwidth of the CORESET 0, and the CORESET 0 is a CORESET used to schedule the SIB1.

In a possible implementation, the SIB1 includes first configuration information, and the first configuration information indicates a start location and a bandwidth of each of the *m* frequency domain units.

In a possible implementation, the first configuration information includes second indication information and third indication information, the second indication information indicates one or *m* frequency reference points corresponding to the *m* frequency domain units, the third indication information indicates first offset value information corresponding to each of the *m* frequency domain units, and the first offset value information indicates offset between a start location of a frequency domain unit and a frequency reference point corresponding to the frequency domain unit.

In a possible implementation, the second indication information indicates an absolute frequency channel number of each of the one or *m* frequency reference points, or the second indication information indicates second offset value information corresponding to each of the one or *m* frequency reference points, and the second offset value information indicates offset between a frequency reference point and the SSB.

In a possible implementation, the first offset value information indicates an offset value and an offset direction, and/or the second offset value information indicates an offset value and an offset direction.

For more detailed descriptions of the transceiver unit 720 and the processing unit 710, refer to related descriptions of the terminal in the method embodiment shown in FIG. 4.

As shown in FIG. 7, a communication apparatus 700 includes a processing unit 710 and a transceiver unit 720. The communication apparatus 700 is configured to implement functions of the network device in the method embodiment shown in FIG. 4.

When the communication apparatus 700 is configured to implement the functions of the network device in the method embodiment shown in FIG. 4, the transceiver unit 720 is configured to send a synchronization signal block SSB, where the SSB is located in a first frequency domain unit of a first cell, a frequency domain resource of the first cell includes *m* frequency domain units, *m* is an integer greater than 1, the *m* frequency domain units are non-adjacent in frequency domain, the SSB indicates a resource carrying control information, and the control information is used to schedule an SIB1; and the transceiver unit 720 is further configured to send the SIB1.

In a possible implementation, the *m* frequency domain units correspond to a same downlink carrier, or the *m* frequency domain units correspond to *m* downlink carriers.

In a possible implementation, the SSB includes first indication information, the first indication information indicates an absolute frequency channel number of a frequency domain start location of a control resource set CORESET 0 and a bandwidth of the CORESET 0, and the CORESET 0 is a CORESET used to schedule the SIB1.

In a possible implementation, the SIB1 includes first configuration information, and the first configuration information indicates a start location and a bandwidth of each of the *m* frequency domain units.

In a possible implementation, the first configuration information includes second indication information and third indication information, the second indication information indicates one or *m* frequency reference points corresponding to the *m* frequency domain units, the third indication information indicates first offset value information corresponding to each of the *m* frequency domain units, and the first offset value information indicates offset between a start location of a frequency domain unit and a frequency reference point corresponding to the frequency domain unit.

In a possible implementation, the second indication information indicates an absolute frequency channel number of each of the one or *m* frequency reference points, or the second indication information indicates second offset value information corresponding to each of the one or *m* frequency reference points, and the second offset value information indicates offset between a frequency reference point and the SSB.

In a possible implementation, the first offset value information indicates an offset value and an offset direction, and/or the second offset value information indicates an offset value and an offset direction.

For more detailed descriptions of the transceiver unit 720 and the processing unit 710, refer to related descriptions of the network device in the method embodiment shown in FIG. 4.

As shown in FIG. 8, the communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to store instructions that are executed by the processor 810, store input data required for running instructions by the processor 810, or store data generated by the processor 810 running instructions.

When the communication apparatus 800 is configured to implement the method shown in FIG. 4, the processor 810 is configured to implement the functions of the processing unit 710, and the interface circuit 820 is configured to implement the functions of the transceiver unit 720.

When the communication apparatus is a chip used in a terminal, the chip in the terminal implements functions of the terminal in the method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent to the base station by these modules.

When the communication apparatus is a chip used in a network device, the chip in the network device implements functions of the network device in the method embodiments. That the chip in the network device receives information from a terminal may be understood as that the information is first received by another module (for example, a radio frequency module or an antenna) in the network device, and then sent by these modules to the chip in the network device. That the chip in the network device sends information to a terminal may be understood as that the information is first sent to another module (for example, a radio frequency module or an antenna) in the network device, and then sent to the terminal by these modules.

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives the information sent by the entity A through another entity. The entity A and the entity B herein each may be a RAN node or a terminal, or may be a module in a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a terminal chip and another module of the terminal, or information exchange between a base station chip and another module of the base station.

It can be understood that the processor in embodiments of this application may be a central processing unit (central processing Unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read only memory, a programmable read only memory, an erasable programmable read only memory, an electrically erasable programmable read only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or a part of the foregoing embodiments may be implemented through software, hardware, firmware, or any combination thereof. When software is used to implement the foregoing embodiments, all or a part of the foregoing embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
receiving a synchronization signal block SSB, wherein the SSB is located in a first frequency domain unit of a first cell, a frequency domain resource of the first cell comprises *m* frequency domain units, *m* is an integer greater than 1, the *m* frequency domain units are non-adjacent in frequency domain, the SSB indicates a resource of control information, and the control information is used to schedule a system information block SIB1; and
receiving the SIB1.

2. The method according to claim 1, wherein the *m* frequency domain units correspond to a same downlink carrier, or the *m* frequency domain units correspond to *m* downlink carriers.

3. The method according to claim 1 or 2, wherein the SSB comprises first indication information, the first indication information indicates an absolute frequency channel number of a frequency domain start location of a control resource set CORESET 0 and a bandwidth of the CORESET 0, and the CORESET 0 is a CORESET used to schedule the SIB1.

4. The method according to any one of claims 1 to 3, wherein the SIB1 comprises first configuration information, and the first configuration information indicates a start location and a bandwidth of each of the *m* frequency domain units.

5. The method according to claim 4, wherein the first configuration information comprises second indication information and third indication information, the second indication information indicates one or *m* frequency reference points corresponding to the *m* frequency domain units, the third indication information indicates first offset value information corresponding to each of the *m* frequency domain units, and the first offset value information indicates offset between a start location of a frequency domain unit and a frequency reference point corresponding to the frequency domain unit.

6. The method according to claim 5, wherein the second indication information indicates an absolute frequency channel number of each of the one or *m* frequency reference points, or the second indication information indicates second offset value information corresponding to each of the one or *m* frequency reference points, and the second offset value information indicates offset between a frequency reference point and the SSB.

7. A communication method, wherein the method comprises:
sending a synchronization signal block SSB, wherein the SSB is located in a first frequency domain unit of a first cell, a frequency domain resource of the first cell comprises *m* frequency domain units, *m* is an integer greater than 1, the *m* frequency domain units are non-adjacent in frequency domain, the SSB indicates a resource carrying control information, and the control information is used to schedule a system information block SIB1; and
sending the SIB1.

8. The method according to claim 7, wherein the *m* frequency domain units correspond to a same downlink carrier, or the *m* frequency domain units correspond to *m* downlink carriers.

9. The method according to claim 7 or 8, wherein the SSB comprises first indication information, the first indication information indicates an absolute frequency channel number of a frequency domain start location of a control resource set CORESET 0 and a bandwidth of the CORESET 0, and the CORESET 0 is a CORESET used to schedule the SIB1.

10. The method according to any one of claims 7 to 9, wherein the SIB1 comprises first configuration information, and the first configuration information indicates a start location and a bandwidth of each of the *m* frequency domain units.

11. The method according to claim 10, wherein the first configuration information comprises second indication information and third indication information, the second indication information indicates one or *m* frequency reference points corresponding to the *m* frequency domain units, the third indication information indicates first offset value information corresponding to each of the *m* frequency domain units, and the first offset value information indicates offset between a start location of a frequency domain unit and a frequency reference point corresponding to the frequency domain unit.

12. The method according to claim 11, wherein the second indication information indicates an absolute frequency channel number of each of the one or *m* frequency reference points, or the second indication information indicates second offset value information corresponding to each of the one or *m* frequency reference points, and the second offset value information indicates offset between a frequency reference point and the SSB.

13. A communication apparatus, comprising a module configured to perform the method according to any one of claims 1 to 6, or a module configured to perform the method according to any one of claims 7 to 12.

14. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus; and the processor is configured to implement the method according to any one of claims 1 to 6 through a logic circuit or by executing code instructions, or the processor is configured to implement the method according to any one of claims 7 to 12 through a logic circuit or by executing code instructions.

15. A computer-readable storage medium, wherein the storage medium stores a computer program or instructions, and when the computer program or the instructions are executed by a communication apparatus, the communication apparatus is caused to implement the method according to any one of claims 1 to 6 or implement the method according to any one of claims 7 to 12.

16. A computer program product, wherein the computer program product comprises a computer program or instructions, and when the computer program or the instructions are executed by a communication apparatus, the communication apparatus is caused to implement the method according to any one of claims 1 to 6 or implement the method according to any one of claims 7 to 12.
